# EUROPEAN PATENT SPECIFICATION

(11) **EP 3 757 648 B1**
(45) Date of publication and mention of the grant of the patent: **30.08.2023**
(21) Application number: 20154147.1
(22) Date of filing: 28.01.2020
(51) Int. Cl.: G02B 21/00, G02B 21/26, G02B 21/36

(54) **OPTICAL SYSTEM ATTACHABLE TO A MOBILE DEVICE FOR SCANNING BIOLOGICAL SAMPLE SLIDES AND OPERATING METHOD THEREOF**
AN EINER MOBILEN VORRICHTUNG BEFESTIGBARES OPTISCHES SYSTEM ZUM SCANNEN BIOLOGISCHER PROBENTRÄGER UND BETRIEBSVERFAHREN DAFÜR
SYSTÈME OPTIQUE POUVANT ÊTRE FIXÉ SUR UN DISPOSITIF MOBILE POUR LE BALAYAGE DE LAMES D'ÉCHANTILLON BIOLOGIQUE ET SON PROCÉDÉ DE FONCTIONNEMENT

(30) Priority: 28.06.2019 PT 2019115614
(43) Date of publication of application: 30.12.2020
(73) Proprietor: Associação Fraunhofer Portugal, 4200-135 Porto (PT)
(72) Inventor: CAEIRO MARGALHO GUERRA ROSADO, Luis Filipe, 4200 - 537 PORTO (PT); MACIEIRA SOARES TORRES DA SILVA, Paulo André, 4150-615 PORTO (PT); VISEU OLIVEIRA, João Carlos, 4200-135 PORTO (PT); NETO FARIA, José Rui, 4200-135 PORTO (PT); CHRISTIAN ELIAS, Dirk, 4200-135 PORTO (PT); ALVES CORREIA DA COSTA, José Manuel, 4300-179 PORTO (PT)
(74) Representative: Patentree

(56) References cited:
- EP-A1- 3 401 721
- WO-A1-00/75709
- WO-A1-03/073365
- WO-A1-2016/022359
- WO-A1-2016/061563
- WO-A1-2019/034328
- WO-A2-97/20198
- US-A1- 2019 137 743

## Description

### TECHNICAL FIELD

The present disclosure relates to an optical system and method of operating the optical system attached to a mobile device comprising a camera and electronic data processor for scanning biological sample slides.

### BACKGROUND

The traditional method of focusing microscopes involves manually adjusting the vertical position of the microscope stage until a focused microscopic field is obtained. However, for screening processes that requires the analysis of a huge number of microscopic fields per specimen, this process clearly becomes cumbersome. As an illustrative example, the analysis of malaria-infected blood smears usually involves the analysis of at least 100 distinct microscopic fields for each specimen. The microscopist is even advised to rest regularly, to avoid human errors and ensure high performance rates.

Automated focus is a long-standing topic in the literature, and several focus algorithms have been proposed. However, the search for the proper algorithm still remains an open topic, since it highly depends on the visual characteristics of the specimen and characteristics of the camera sensor. A specimen is typically a microscopic preparation, for example comprising smears, sections, squash preparations, or whole-mount preparations, among others.

Document WO2016061563A1 discloses an automated slide scanning system having a drive mechanism for translating a platform along x-y axis, i.e. transversally in respect of an objective. The platform is also movable along a z-axis in the direction of the objective for focusing. However, document WO2016061563A1 does not disclose how to manage the x-y axis translation and z axis focusing in order to achieve a highly efficient image capture when there is a need to capture a large number of images of the same sample.

These facts are disclosed in order to illustrate the technical problem addressed by the present disclosure.

### GENERAL DESCRIPTION

The present disclosure relates to an optical system and method of operating the optical system attached to a mobile device comprising a camera and electronic data processor for scanning biological sample slides. A method, a non-transitory storage medium, a mobile device and a combination of a mobile device and an optical system according to the invention are defined in the appended claims.

The present disclosure describes a method of operating an optical system that is affordable, portable and an automated alternative to conventional microscopes for specimen focusing and scanning.

In an embodiment, the method of operating the optical system is a fully automated approach based on the closed loop control of a motorized automated stage via a mobile device, which in turn is coupled to an optical device.

In an embodiment, the optical system comprises: one or more optical elements that allow a specific magnification power. Different optical set-ups can be accommodated, allowing different magnification powers (ranging from 1x to 1000x); a motorized XYZ platform that can be controlled by a mobile device; an application programming interface "API" to control the motorized XYZ platform by the mobile device.

In an embodiment, the optical system further comprises an automated focus logic approach. The automated focus logic approach autonomously decides when to move the microscope slide along the Z-axis until it reaches the focus point. In particular, the system decides when to capture a focused image of the microscopic field, by processing the video stream coming from the camera sensor, via algorithms that extracts focus metrics which quantifies the image focus in real-time.

In an embodiment, the method of operating an optical system that is attached to a mobile device comprising camera and electronic data processor comprises:
(a) Automated Focus: The system moves the microscope slide along the Z-axis (vertical movement) until it reaches the focus point. In particular, the system decides when to capture a focused image of the microscopic field, by processing the video stream coming from the camera sensor, via algorithms that quantifies the image focus in real-time.
(b) Automated Image Acquisition: After the Automated Focus step reaches the focus point, the Smartphone captures an image of the focused microscopic field, with a pre-defined set of camera parameters (e.g. image resolution, white balancing mode, ISO, exposure duration, etc.)
(c) Automated Slide Scanning: After the Automated Image Acquisition captures a focused image of a microscopic field, the system autonomously decides where to move the microscope slide along the X-axis Y-axis plane (horizontal movement), according to a pre-defined scanning pattern. When the new X-axis Y-axis position is reached, the Automated Focus step, followed by the Automated Image Acquisition step, are repeated. This process is repeated until the complete scanning pattern is completed, i.e. all the pre-defined X-axis Y-axis positions are covered.

In an embodiment, the motorized automated stage is fully controlled by an application programming interface "API" in the mobile device which autonomously decides when to move the microscope slide along the Z-axis until it reaches the focus point.

In an embodiment, the optical system decides when to capture a focused image of the microscopic field by processing the video stream coming from the camera sensor using algorithms that quantifies the image focus in real-time.

In an embodiment, after the image is acquired, the optical system also autonomously decides when to move the microscope slide into a new position along the X-axis and Y-axis according to a pre-defined scanning pattern.

In an embodiment, there are two different image acquisition modes: Manual Acquisition and Automatic Acquisition.

In an embodiment, the autofocus logic comprises seven stages: (a) automatic acquisition of the image, (b) starting the z-axis movement, (c) rough, i.e. faster z-axis movement for approximate focusing, (d) precise, i.e. slower z-axis movement for precise focusing, (e) determining end success if the image is finally focused, (f) determining end fail if it was not possible a focused to capture a focused image, (g) optionally, if failure is determined, resetting the method and restarting.

In an embodiment, the motorized automated stage moves the microscopic slide along the X-axis and Y-axis according to two different modes: (a) spiral mode and (b) sweep mode.

In an embodiment, the optical system comprises three camera view modes for three different types of specimen: (a) thin blood smears; (b) thick blood smears; and (c) cytological smears. Each camera view mode encompasses the respective fine tuning of the Automated Focus for the typology of smear that each specimen type represents, namely: (a) smears with dense concentration of visible structures in each microscopic field at 1000x magnification; (b) smears with low concentration of visible structures in each microscopic field at 1000x magnification; and (c) smears with dense concentration of visible structures in each microscopic field at 400x magnification.

It is disclosed a method of operating an optical system attached to a mobile device comprising an electronic data processor and a camera having an objective, for scanning a biological sample slide by capturing multiple translational images of said slide;
wherein the optical system comprises a magnifying optical element or elements for magnifying the biological sample slide;
wherein the optical system comprises a movable platform, which is movable transversally in respect of the objective along axis X-Y, and which is also movable in a Z-axis to and from the objective;
wherein the optical system comprises a motor mechanism for translating the platform along the x-y axis and moving the platform along the z-axis;
wherein the optical system comprises an interface for closed-loop control of the motor mechanism of the optical system by the electronic data processor;
wherein the method comprises carrying out by the electronic data processor the following steps:
   establishing and maintaining a video streaming channel from the camera into the electronic data processor throughout the image capture;
   translating the platform to a first X-Y axis position;
   moving the platform along the Z-axis until a captured frame from said video streaming channel is determined as focused;
   capture an image with the camera sensor at the focal plane, using a predetermined set of camera parameters for static image capture;
   saving said captured image as a first captured image;
   translating the platform to a second X-Y axis position and, simultaneously or in sequence, moving the platform along the Z-axis by a predetermined Z-axis distance in a first direction to or from the focal plane, wherein the predetermined Z-axis distance is a fraction of the total Z-axis movement available in the optical system;
   moving the platform along the Z-axis in a second direction which is the inverse of the first direction to or from the focal plane, until a captured frame from said video streaming channel is determined as focused;
   capture an image with the camera sensor at the focal plane, using the predetermined set of camera parameters for static image capture;
   saving said captured image as a second captured image;
   repeating the steps above, starting from translating to a second X-Y axis position, until a predetermined number of images from different microscopic fields are captured.

In an embodiment, the second X-Y axis position is defined relative to the first X-Y axis position such that the first captured image and second captured image are adjacent.

In an embodiment, successive X-Y axis positions are determined such that a rational spiral path of adjacent captured images is obtained.

In an embodiment, successive X-Y axis positions are determined such that a two-direction sweeping path of adjacent captured images is obtained.

In an embodiment, successive X-Y axis positions are determined such that successive X-direction scans are carried out in inverse direction of the preceding X-direction scan by incrementally moving along the Y-direction for each X-direction scan.

An embodiment comprises determining a captured frame of the video streaming channel as focused. This is achieved with a machine learning model pre-trained with previously captured images of the target specimen type, using both focused and unfocused images, and labelled accordingly.

In an embodiment, the moving the platform along the Z-axis position until a captured frame from said video streaming channel is determined as focused comprises successive Z-axis adjustments, wherein the said adjustments have a decreasing Z-axis step.

In an embodiment, the moving the platform along the Z-axis position until a captured frame from said video streaming channel is determined as focused, comprises:
a first stage of successively moving along the Z-axis by a first predetermined Z-axis step distance; and a
a second stage of successively moving along the Z-axis by a second predetermined Z-axis step distance;
wherein the first predetermined Z-axis step distance is larger than the second predetermined Z-axis step distance.

In an embodiment, the translating the platform to a second X-Y axis position is carried out in sequence before moving the platform along the Z-axis position in said first direction.

In an embodiment, if the electronic data processor is unable to determine any captured frame from said video streaming channel as focused, when moving the platform along the Z-axis in said second direction,
the method further comprises moving the platform along the Z-axis in said first direction by a further fraction of the total Z-axis movement available in the optical system,
wherein said further fraction of the total Z-axis movement available in the optical system is larger than the first fraction of the total Z-axis movement available in the optical system.

In an embodiment, the optical system and the electronic data processor are arranged for scanning a biological sample slide of thin blood smear, thick blood smear, cytological smear, or test smear.

In an embodiment, the method is for analysing a biological sample slide, wherein the biological sample slide is a blood sample slide potentially infected with malaria, or a cervical cytology slide for cervical cancer screening.

In an embodiment, the optical system can accommodate different magnification powers, from 1x to 1000x amplification.

It is also disclosed a non-transitory storage media including program instructions for implementing a method of operating an optical system attached to a mobile device comprising an electronic data processor and a camera having an objective, for scanning a biological sample slide by capturing multiple translational images of said slide, the program instructions including instructions executable by a data processor to carry out any of the disclosed methods.

It is also disclosed a mobile device comprising the non-transitory storage media according to the previous embodiment.

It is also disclosed a mobile device and optical system attachable to the mobile device comprising an electronic data processor and a camera having an objective, for scanning a biological sample slide by capturing multiple translational images of said slide;
wherein the optical system comprises a magnifying optical element or elements for magnifying the biological sample slide;
wherein the optical system comprises a movable platform, which is movable transversally in respect of the objective along axis X-Y, and which is also movable in a Z-axis to and from the objective;
wherein the optical system comprises a motor mechanism for translating the platform along the x-y axis and moving the platform along the z-axis;
wherein the optical system comprises an interface for closed-loop control of the motor mechanism of the optical system by the electronic data processor;
wherein the electronic data processor is arranged for carrying out any of the disclosed methods, in particular the following steps:
   establishing and maintaining a video streaming channel from the camera into the electronic data processor throughout the image capture;
   translating the platform to a first X-Y axis position;
   moving the platform along the Z-axis position until a captured frame from said video streaming channel is determined as focused;
   capture an image with the camera sensor at the focal plane, using a predetermined set of camera parameters for static image capture;
   saving said captured image as a first captured image;
   translating the platform to a second X-Y axis position and, simultaneously or in sequence, moving the platform along the Z-axis position by a predetermined Z-axis distance in a first direction to or from the objective, wherein the predetermined Z-axis distance is a fraction of the total Z-axis movement available in the optical system;
   moving the platform along the Z-axis position in a second direction which is the inverse of the first direction to or from the objective, until a captured frame from said video streaming channel is determined as focused;
   capture an image with the camera sensor at the focal plane, using a predetermined set of camera parameters for static image capture;
   saving said captured image as a second captured image;
   repeating the steps above, starting from translating to a second X-Y axis position, until a predetermined number of images from different microscopic fields are captured.

### BRIEF DESCRIPTION OF THE DRAWINGS

The following figures provide preferred embodiments for illustrating the disclosure and should not be seen as limiting the scope of invention.
**Figure 1** illustrates the method of operating an optical system according to an embodiment.
**Figure 2** illustrates the process flow of the manual image acquisition mode according to an embodiment.
**Figure 3** illustrates the process flow of the automatic image acquisition mode according to an embodiment. The lines marked with *1 , *2, *3 and *4 connect respectively with the other *1, *2, *3 and *4 marked lines.
**Figure 4** illustrates the process flow of the autofocus logic according to an embodiment.
**Figure 5** illustrates the spiral mode movement of the camera along the X-axis and Y-axis of the microscopic slide according to an embodiment.
**Figure 6** illustrates the sweep mode movement of the camera along the X-axis and Y-axis of the microscopic slide according to an embodiment.
**Figure 7** illustrates a representation of an embodiment of the optical system with an attached smartphone and inserted microscopic slide.

### DETAILED DESCRIPTION

The present disclosure relates to an optical system and method of operating the optical system attached to a mobile device comprising a camera and electronic data processor for scanning biological sample slides.

The present disclosure also relates to a method of operating an optical system that is attached to a mobile device comprising camera and electronic data processor.

The present disclosure describes a method of operating an optical system that is affordable, portable and an automated alternative to conventional microscopes for specimen focusing and scanning.

In an embodiment, the method of operating the optical system is a fully automated approach based on the closed loop control of a motorized automated stage via a mobile device, which in turn is coupled to an optical device.

In an embodiment, the optical system comprises: an optical device that allows a specific magnification power. Different optical set-ups can be accommodated, allowing different magnification powers (ranging from 1x to 1000x); a motorized XYZ platform that can be controlled by a mobile device; an application programming interface "API" to control the motorized XYZ platform. In particular, the platform movement means from [12] may be used. Alternatively, in particular the platform movement means of WO2016061563A1 may be used.

In an embodiment, the method of operating an optical system that is attached to a mobile device comprising camera and electronic data processor comprises:
(a) Automated Focus: The system moves the microscope slide along the Z-axis (vertical movement) until it reaches the focus point. In particular, the system decides when to capture a focused image of the microscopic field, by processing the video stream coming from the camera sensor, via algorithms that quantifies the image focus in real-time.
(b) Automated image Acquisition: After the Automated Focus step reaches the focus point, the Smartphone captures an image of the focused microscopic field, with a pre-defined set of camera parameters (e.g. image resolution, white balancing mode, ISO, exposure duration, etc.)
(c) Automated Slide Scanning: After the Automated Image Acquisition captures a focused image of a microscopic field, the system autonomously decides where to move the microscope slide along the X-axis Y-axis plane (horizontal movement), according to a pre-defined scanning pattern. When the new X-axis Y-axis position is reached, the Automated Focus step, followed by the Automated Image Acquisition step, are repeated. This process is repeated until the complete scanning pattern is completed, i.e. all the pre-defined X-axis Y-axis positions are covered.

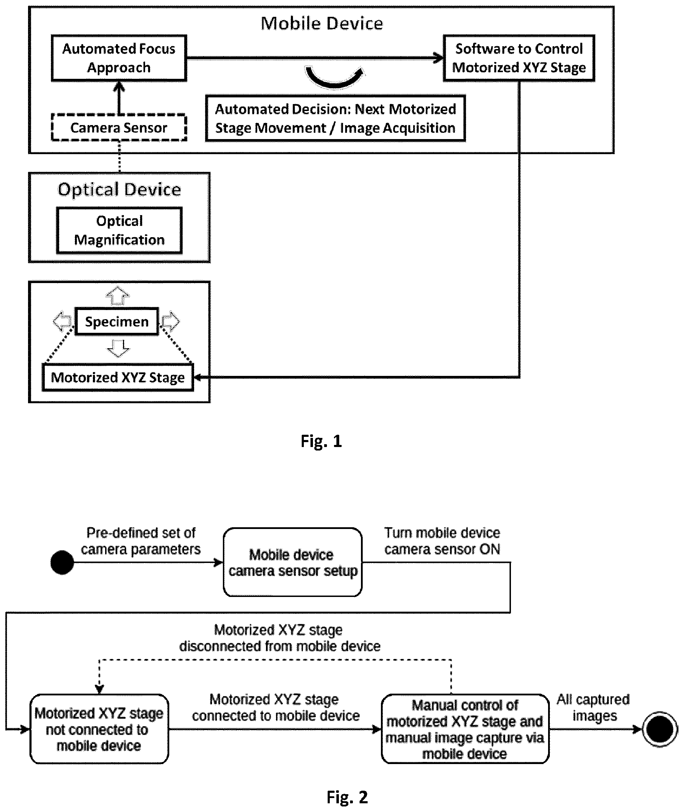

**Figure 1** illustrates the method of operating an optical system.

In an embodiment, the motorized automated stage is fully controlled by an application programming interface "API" in the mobile device which autonomously decides when to move the microscope slide along the Z-axis until it reaches the focus point.

In an embodiment, the optical system decides when to capture a focused image of the microscopic field by processing the video stream coming from the camera sensor using algorithms that quantifies the image focus in real-time.

In an embodiment, after the image is acquired, the optical system also autonomously decides to move the microscope slide into a new position along the X-axis and Y-axis, according to a pre-defined scanning pattern.

In an embodiment, there are two different image acquisition modes: Manual Acquisition and Automatic Acquisition.

In an embodiment, the manual acquisition mode has a simpler flow than the automatic acquisition. In manual acquisition mode, the camera activity and associated view model are called and shown to the user. Afterwards, the library opens the mobile device's camera and waits for the user to connect to the optical device. In manual acquisition mode, the user must connect the cable and press the option "connect to Motorized XYZ stage" presented in the activity, in order to connect and later control the optical device. After having the mobile device connected to the optical device, the user manually controls the optical device like a motorized microscope and takes pictures. This manual acquisition mode only ends successfully if the user takes the number of pictures defined previously. If the user closes the acquisitions before it ends, all the pictures taken up till then are still saved or returned to the user, but the system returns a cancelled state.

**Figure 2** illustrates the process flow of the manual image acquisition mode.

In an embodiment, the automatic acquisition mode flow is more complex than manual mode since its objective is to handle the acquisition automatically. Thus, a sequence of automatic procedures are required in order to finish that task successfully without the need for any human interaction. Automatic acquisition mode starts in a way similar to the manual acquisition mode. The automatic acquisition mode starts by first initiating the camera activity, the associated view model and the classes. Thereafter, the camera is switched on and the system waits for the optical device to be connected. If the connection is successful, the next step is the correct positioning of the mobile device on top of the optical device and, the correct alignment of the mobile device camera with the optical aperture of the optical device. A computer vision routine is used to ensure the correct alignment by using an optical circle detection algorithm. When the user confirms the optimal positioning of the mobile device, the optical device resets and prompts the user to insert the microscope slide into the optical device. Finally, the automatic acquisition mode automatically acquires the number of focused images previously defined, by using the Autofocus logic.

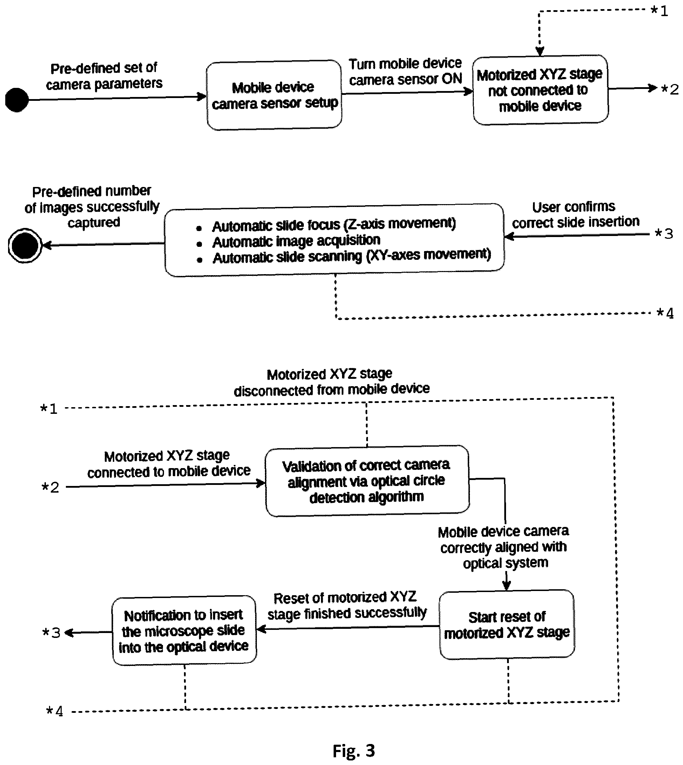

**Figure 3** illustrates the process flow of the automatic image acquisition mode.

In an embodiment, the autofocus logic algorithm comprises five main stages: (a) automatic acquisition, (b) Start, (c) Rough, (d) Precise, (e) End success.

In an embodiment, the autofocus logic further comprises an end fail stage and a failure reset stage.

In an embodiment, the first stage of the autofocus logic is the automatic acquisition stage. This stage is only called once at the beginning of the acquisitions. Its objective is to set the X-axis and Y-axis movement of the Motorized XYZ stage to the movement type defined in the configuration (Spiral or Sweep mode). This stage also makes a reset in X-axis value and Y-axis value if its movement type is set to sweep, in order to move the sample platform to the position (0,16) and facilitate the next X-axis and Y-axis movements of the algorithm.

In an embodiment, the second stage of the autofocus logic is the Start stage. This stage is called every time an acquisition of an image is starting. This is generally used to move the sample platform directly to the Z-axis position where the Rough stage will start. The initial Z-axis position can take three different values:

If it is the first acquisition or after a reset, this initial Z-axis value is defined as the predetermined initial z-distance parameter in the configuration.

If the previous acquisition ended in failure but no reset happened, then the initial Z-axis values is the Z-axis value where the failed run ended plus the parameter of a predetermined refocus fallback after a fail z-distance (a negative value) in configuration.

If the previous acquisition ended in a success, then the initial Z-axis value is the Z-axis value where the successful run ended plus the parameter of a predetermined refocus fallback after a success z-distance (a negative value) in configuration.

The different values used for each case are used in order to speed up the acquisition process. Particularly, if the previous acquisition was a success, the algorithm would know where the picture was taken and only needs to reverse a small amount (said predetermined refocus fallback after a success z-distance) along the Z axis to take another good picture.

In an embodiment, the third stage of the autofocus logic is the Rough stage. This stage can only be reached by itself or the start state. This stage can be considered the stage where the algorithm starts, after having the platform positioned in the initial Z-axis position, the platform starts moving with steps of a predetermined Rough focusing step size, and after every step, calculates a focus metric that can be previously selected according to the target specimen type (e.g. the Tenenbaum Gradient mean and standard deviation - hereinafter "STD"- described in [12] may be used in order to assess the focus level at that particular position. These calculated values are then saved and used in the next Rough stage step to also calculate the respective focus metric slope (e.g. Tenenbaum Gradient slope described in [12] may be used). The focus metric slope quantifies the relative focus variation between two video frames from consecutive Z-axis positions, thus helping assessing if the current Z-axis step actually contributed to approach or move away from the focal plane. After each step and corresponding focus metric slope calculation, two conditions are tested:

If focus metric slope > a predetermined minimum slope and focus metric mean > a predetermined minimum mean and focus metric mean > focus metric STD * a predetermined minimum percentage slope is met, then the algorithm goes to the Precise stage. It should be noted that the first sub-condition is the most important and relevant to enter the Precise stage, being the other two sub-conditions generally used only for niche cases where some dirt or coagulated gel may be on the lens during the acquisition;

If actual Z-axis position > final Z-axis position (calculated by adding a predetermined parameter of z-distance range to initial Z-axis position) is met, then the algorithm goes to End fail stage, since the area where the Z-axis position of the focus point was certainly passed, but there were not big enough changes in the focus metrics for the algorithm to enter the Precise stage.

In an embodiment, the fourth stage of the autofocus logic is the Precise stage. This stage can only be reached by itself or by the Rough stage. Generally, this is the stage where the algorithm starts to detect significant variations in the focus metrics values. In this stage the platform starts moving with steps of predetermined precise focusing step size, and after every step, calculates the focus metric STD values. The step with the highest focus metric STD is considered the most focused step. In order to make the comparison mentioned previously in a continuous way, the first time the Precise stage is called it captures an image with the camera sensor, considering it the most focused captured image found so far, and saves the focus metric STD of the respective frame from the video streaming channel, considering it the highest focus metric STD found so far; in posterior Z-axis steps, the focus metric STD of the new video frames are computed and compared with the highest focus metric STD found so far; if the new video frame has a bigger focus metric STD value, then a new image is captured with the camera sensor, being updated both the most focused image and the highest focus metric STD found so far. When the algorithms fail to get a better image after a predetermined number of consecutive Z-axis steps, then the acquisition ends in success.

In an embodiment, the fifth stage of the autofocus logic is the End success stage. This stage is reached when the Precise stage ends. In this stage, the most focused captured image found is saved, and the initial and final Z-axis position for the next acquisition are updated. The system stores the picture acquired in the Precise stage, and decides if it ends the acquisition process or attempts to capture another picture in a new X-axis Y-axis position, according to the pre-defined scanning pattern.

In an embodiment, the end fail stage of the autofocus logic happens when the algorithm did not reach the Precise stage. This means that the acquisition ended in failure. When this happens, the number of consecutive acquisition fails is incremented. After observing the number of consecutive fails, a conclusion can be drawn:

If consecutive fails > predetermined number of acquisition fails for determining reset, then failure reset state is called.

If consecutive fails > predetermined number of acquisition fails for determining fail, then the algorithm ends in failure.

Otherwise, the initial and final Z-axis position for the next acquisition on the new X-axis Y-axis position are calculated, according to the pre-defined scanning pattern.

This stage happens when the algorithm is unable to enter the Precise stage, and generally means that either there is nothing to focus on the sample or there is something that is changing the expected results (for example, dirt stuck on the lens or coagulated gel).

In an embodiment, the failure reset stage of the autofocus logic is called every predetermined number of acquisition fails for determining reset of consecutive fails. This stage generally updates the initial and final Z-axis position for the next acquisition and initiates the reset procedure in order to remove some accumulated errors that may exist in the estimation of the real Z-axis position, and consequently may have caused the failures. Subsequently, it calls the Start stage to start a new acquisition.

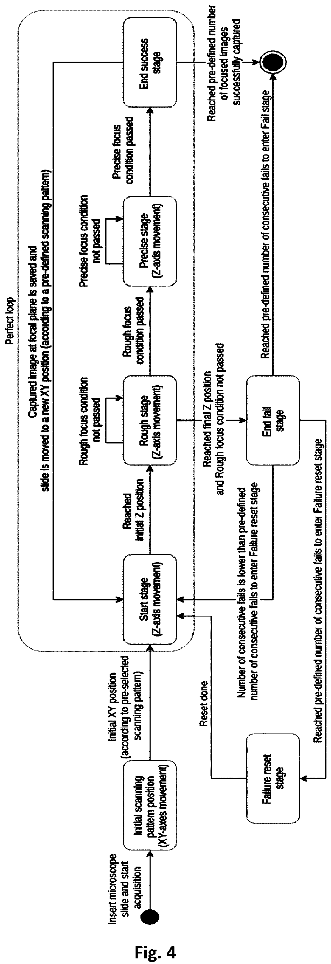

**Figure 4** illustrates the process flow of the autofocus logic.

In an embodiment, the motorized automated stage moves the microscopic slide along the X-axis and Y-axis according to two different modes: (a) spiral mode and (b) sweep mode.

In an embodiment, the spiral mode is generally used in the image acquisition of 1000x magnification for thin and thick blood smears. In the spiral mode, the platforms movement starts from a centred position (for example 7,7) and then, each time a picture is taken, moves one step along the X-axis or Y-axis in order to take the next picture such that the images already captured are not repeated. The motion generates a spiral pattern.

The spiral mode relies on the use of a spiral which can be defined using a rational spiral drawn in a 2D surface. In more detail, the rational spiral allows to enumerate the rational numbers. The rational spiral rational numbers are countable, such that an order can be placed on them just like natural numbers. Although such an ordering is not obvious (nor unique), one such ordering can be achieved by letting the X-axis represent the denominator of a rational number and the Y-axis the numerator. Beginning at the origin, spiral clockwise away from it, so that each integer pair represents a rational number. Each time that the Y-axis is passed, the denominator will be 0, which generates an illegal number, and all such numbers need to be skipped. Repeats, such as -1/1 and 1/-1, also occur. Therefore, only the first occurrence of a rational number should be included in the spiral. Since numbers like 8/4=2/1 can be reduced, such repeats must also be skipped. [13]

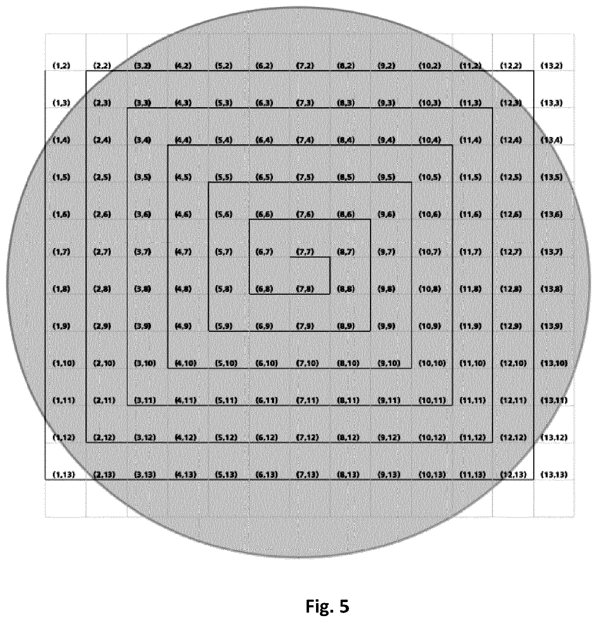

**Figure 5** illustrates the spiral mode movement of the camera along the X-axis and Y-axis of the microscopic slide.

In an embodiment, the sweep mode is generally used in the image acquisitions of 400x cytological smears. This mode works better for optical devices which uses 2 rubber bands to force the inverse movement of the sample stage imposed by the servo motors.

When moving in the tensioning direction, a problem arises when servos are giving small steps, since the force of a rubber band might block the movement due to the high tension of the rubber band. To counter this drawback, the sweep mode starts by sending the sample stage to the most tense position for X-axis and Y-axis, the position (16,16). Afterwards, the X-axis position is fixed, and the Y-axis position starts to give unitary steps in the direction that releases tension: (16, 15), (16,14), ...., (16,3). When the Y-axis position reaches the lowest tension position (16,3), the stage moves to following highest tension position (15,16), and the process is repeated. This pattern is repeated until the lowest tension position (3,3) for X-axis and Y-axis is achieved. This mode generally requires a minimum step limit (generally with value 2 or 3) due to a loss of precision caused by the extra force of the rubber band (the system thinks the stepper position is 3/4 when, in reality, is 0).

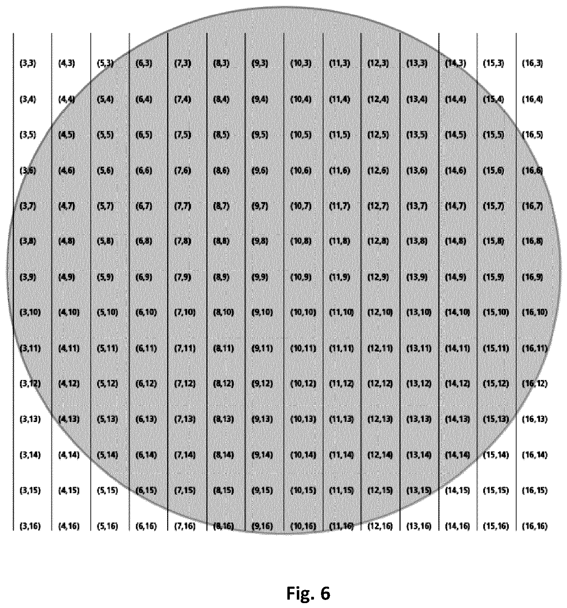

**Figure 6** illustrates the sweep mode movement of the camera along the X-axis and Y-axis of the microscopic slide.

In an embodiment, the optical system comprises four main configurations of mobile camera view adjustment modes for four different types of specimen: thin blood smear, thick blood smear, cytological smear, test smear.

In an embodiment, the thin blood smear configuration of the mobile camera view adjustment mode is used for thin blood smears with 1000x amplification.

In an embodiment, the thick blood smear configuration of the mobile camera view adjustment mode is used for thick blood smears with 1000x amplification.

In an embodiment, the cytological smear configuration of the mobile camera view adjustment mode is used for cytological samples with 400x amplification.

In an embodiment, the test smear configuration of the mobile camera view adjustment mode is used to test new types of samples so its values are not defined.

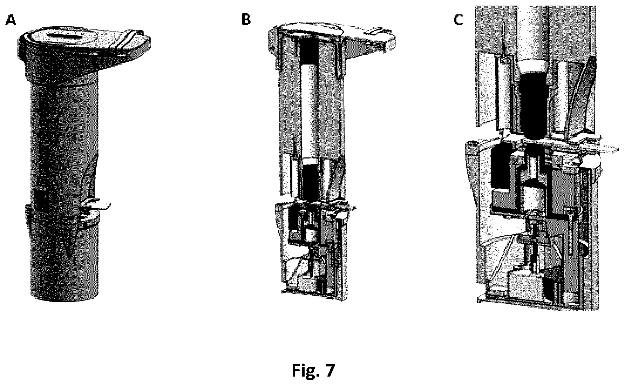

**Figure 7** illustrates a schematic representation of an embodiment of one possible design of the optical system with smartphone attached and microscopic slide inserted (as disclosed on document WO2016061563A1), wherein (A) is an external view with microscope slide inserted; (B) is a cut view with optical and electrical components highlighted; (C) is a detail of the cut view. See p. 18 onwards.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof. The above described embodiments are combinable according to the appended claims.

### References

[1] Tseng, D., Mudanyali, O., Oztoprak, C., Isikman, S.O., Sencan, I., Yaglidere, O., Ozcan, A.: Lensfree microscopy on a cellphone. Lab on a Chip 10(14) (July 2010) 1787-1792
[2] Pirnstill, C.W., Cot, G.L.: Malaria Diagnosis Using a Mobile Phone Polarized Microscope. Scientific Reports 5 (August 2015) 13368
[3] Arpa, A., Wetzstein, G., Lanman, D., Raskar, R.: Single lens off-chip cellphone microscopy, IEEE (June 2012) 23-28
[4] Cybulski, J.S., Clements, J., Prakash, M.: Foldscope: Origami-Based Paper Microscope. PLoS ONE 9 (6) (June 2014) e98781
[5] Smith, Z.J., Chu, K., Espenson, A.R., Rahimzadeh, M., Gryshuk, A., Molinaro, M., Dwyre, D.M., Lane, S., Matthews, D., Wachsmann-Hogiu, S.: Cell-Phone-Based Platform for Biomedical Device Development and Education Applications. PLoS ONE 6 (3) (March 2011) e17150
[6] Switz, N.A., D'Ambrosio, M.V., Fletcher, D.A.: Low-Cost Mobile Phone Microscopy with a Reversed Mobile Phone Camera Lens. PLoS ONE 9 (5) (May 2014) e95330
[7] Motic. EasyScan Go | Optically Intelligent Disease Scanning. http://www.easyscango.com. Accessed: 2018-04-21
[8] C. Mehanian, M. Jaiswal, C. Delahunt, C. Thompson, M. Horning, L. Hu, S. McGuire, T. Ostbye, M. Mehanian, B. Wilson, C. Champlin, E. Long, S. Proux, D. Gamboa, P. Chiodini, J. Carter, M. Dhorda, D. Isaboke, B. Ogutu, W. Oyibo, E. Villasis, K. M. Tun, C. Bachman, and D. Bell. Computer-automated malaria diagnosis and quantitation using convolutional neural networks. In 2017 IEEE International Conference on Computer Vision Workshops (ICCVW), pages 116-125, Oct 2017.
[9] Luís Rosado, José M. Correia da Costa, Dirk Elias, and Jaime S. Cardoso. Automated Detection of Malaria Parasites on Thick Blood Smears via Mobile Devices. Procedia Computer Science, 90:138-144, January 2016.
[10] Yochay Eshel, Arnon Houri-Yafin, Hagai Benkuzari, Natalie Lezmy, Mamta Soni, Malini Charles, Jayanthi Swaminathan, Hilda Solomon, Pavithra Sampathkumar, Zul Premji, Caroline Mbithi, Zaitun Nneka, Simon Onsongo, Daniel Maina, Sarah Levy-Schreier, Caitlin Lee Cohen, Dan Gluck, Joseph Joel Pollak, and Seth J. Salpeter. Evaluation of the parasight platform for malaria diagnosis. J Clin Microbiol, 55(3):768-775, Mar 2017.
[11] https://www.aicos.fraunhofer.pt/en/our_work/projects/mpds.html - Fraunhofer Portugal MpDs.
[12] https://link.springer.com/chapter/10.1007/978-3-319-94806-5_2
[13] http://mathworld.wolfram.com/RationalSpiral.html

## Claims

1. Method of operating an optical system attached to a mobile device comprising an electronic data processor and a camera having an objective, for scanning a biological sample slide by capturing multiple translational images of said slide;
wherein the optical system comprises a magnifying optical element or elements for magnifying the biological sample slide;
wherein the optical system comprises a movable platform, which is movable transversally in respect of the objective along axis X-Y, and which is also movable in a Z-axis to and from the objective;
wherein the optical system comprises a motor mechanism for translating the platform along the x-y axis and moving the platform along the z-axis;
wherein the optical system comprises an interface for closed-loop control of the motor mechanism of the optical system by the electronic data processor;
wherein the method comprises carrying out by the electronic data processor the following steps:
establishing and maintaining a video streaming channel from the camera into the electronic data processor throughout the image capture;
translating the platform to a first X-Y axis position; moving the platform along the Z-axis until a captured frame from said video streaming channel is determined as focused;
capture an image with the camera sensor at the focal plane, using a predetermined set of camera parameters for static image capture;
saving said captured image as a first captured image;
translating the platform to a second X-Y axis position and, simultaneously or in sequence, moving the platform along the Z-axis by a predetermined Z-axis distance in a first direction to or from the focal plane, wherein the predetermined Z-axis distance is a fraction of the total Z-axis movement available in the optical system;
moving the platform along the Z-axis in a second direction which is the inverse of the first direction to or from the focal plane, until a captured frame from said video streaming channel is determined as focused;
capture an image with the camera sensor at the focal plane, using the predetermined set of camera parameters for static image capture;
saving said captured image as a second captured image;
repeating the steps above, starting from translating to a second X-Y axis position, until a predetermined number of images from different microscopic fields are captured.

2. Method of operating an optical system according to the previous claim wherein the second X-Y axis position is defined relative to the first X-Y axis position such that the first captured image and second captured image are adjacent.

3. Method of operating an optical system according to the previous claim wherein successive X-Y axis positions are determined such that a rational spiral path of adjacent captured images is obtained.

4. Method of operating an optical system according to any of the claims 1-2 wherein successive X-Y axis positions are determined such that a two-direction sweeping path of adjacent captured images is obtained.

5. Method of operating an optical system according to the previous claim wherein successive X-Y axis positions are determined such that successive X-direction scans are carried out in inverse direction of the preceding X-direction scan by incrementally moving along the Y-direction for each X-direction scan.

6. Method of operating an optical system according to any of the previous claims comprising determining the video streaming channel as focused with a machine learning method using a machine learning model pre-trained with previously captured images of biological sample slides, wherein said previously captured images comprise focused and unfocused images, and labelled accordingly.

7. Method of operating an optical system according to any of the previous claims wherein the moving the platform along the Z-axis position until a captured frame from said video streaming channel is determined as focused, comprises:
a first stage of successively moving along the Z-axis by a first predetermined Z-axis step distance; and a
a second stage of successively moving along the Z-axis by a second predetermined Z-axis step distance;
wherein the first predetermined Z-axis step distance is larger than the second predetermined Z-axis step distance.

8. Method of operating an optical system according to any of the previous claims wherein the translating the platform to a second X-Y axis position is carried out in sequence before moving the platform along the Z-axis position in said first direction.

9. Method of operating an optical system according to any of the previous claims wherein if the electronic data processor is unable to determine any captured frame as focused from said video streaming channel when moving the platform along the Z-axis in said second direction,
the method further comprises moving the platform along the Z-axis in said first direction by a further fraction of the total Z-axis movement available in the optical system,
wherein said further fraction of the total Z-axis movement available in the optical system is larger than the first fraction of the total Z-axis movement available in the optical system.

10. Method of operating an optical system according to any of the previous claims wherein the optical system and the electronic data processor are arranged for scanning a biological sample slide of thin blood smear, thick blood smear, cytological smear, or test smear.

11. Method of operating an optical system according to any of the previous claims for analysing a biological sample slide, wherein the biological sample slide is a blood sample slide potentially infected with malaria, or a cervical cytology slide for cervical cancer screening.

12. Method of operating an optical system according to any of the previous claims wherein the optical system is adapted to accommodate a variable optical magnification power, in particular from 1x to 1000x amplification.

13. Non-transitory storage media including program instructions for implementing a method of operating an optical system attached to a mobile device comprising an electronic data processor and a camera having an objective, for scanning a biological sample slide by capturing multiple translational images of said slide, the program instructions including instructions executable by a data processor to carry out the method of any of the claims 1-12.

14. Mobile device comprising the non-transitory storage media according to the previous claim.

15. Mobile device and optical system attachable to the mobile device comprising an electronic data processor and a camera having an objective, for scanning a biological sample slide by capturing multiple translational images of said slide;
wherein the optical system comprises a magnifying optical element or elements for magnifying the biological sample slide;
wherein the optical system comprises a movable platform, which is movable transversally in respect of the objective along axis X-Y, and which is also movable in a Z-axis to and from the objective;
wherein the optical system comprises a motor mechanism for translating the platform along the x-y axis and moving the platform along the z-axis;
wherein the optical system comprises an interface for closed-loop control of the motor mechanism of the optical system by the electronic data processor;
wherein the electronic data processor is arranged for carrying out the following steps:
establishing and maintaining a video streaming channel from the camera into the electronic data processor throughout the image capture;
translating the platform to a first X-Y axis position;
moving the platform along the Z-axis position until a captured frame from said video streaming channel is determined as focused;
capture an image with the camera sensor at the focal plane, using a predetermined set of camera parameters for static image capture;
saving said captured image as a first captured image;
translating the platform to a second X-Y axis position and, simultaneously or in sequence, moving the platform along the Z-axis position by a predetermined Z-axis distance in a first direction to or from the objective, wherein the predetermined Z-axis distance is a fraction of the total Z-axis movement available in the optical system;
moving the platform along the Z-axis position in a second direction which is the inverse of the first direction to or from the objective, until a captured frame from said video streaming channel is determined as focused;
capture an image with the camera sensor at the focal plane, using a predetermined set of camera parameters for static image capture;
saving said captured image as a second captured image;
repeating the steps above, starting from translating to a second X-Y axis position, until a predetermined number of images from different microscopic fields are captured.

## Patentansprüche

1. Verfahren zum Betrieb eines optischen Systems, das an einer mobilen Vorrichtung angebracht ist, umfassend einen elektronischen Datenprozessor und eine Kamera mit einem Objektiv, zum Abtasten eines Objektträgers mit biologischen Proben, indem mehrere versetzte Bilder des genannten Objektträgers aufgenommen werden;
wobei das optische System ein vergrößerndes optisches Element oder optische Elemente zur Vergrößerung des Objektträgers mit biologischen Proben umfasst;
wobei das optische System eine bewegliche Plattform umfasst, die quer zum Objektiv entlang der X-Y-Achse beweglich ist und die auch entlang einer Z-Achse zum Objektiv hin und von diesem weg beweglich ist;
wobei das optische System einen Motormechanismus zum Verschieben der Plattform entlang der X-Y-Achse und zum Bewegen der Plattform entlang der Z-Achse umfasst;
wobei das optische System eine Schnittstelle zur Regelung des Motormechanismus des optischen Systems durch den elektronischen Datenprozessor umfasst;
wobei das Verfahren die Durchführung der folgenden Schritte durch den elektronischen Datenprozessor umfasst:
Einrichten und Aufrechterhalten eines Video-Streaming-Kanals von der Kamera in den elektronischen Datenprozessor während der Bilderfassung;
Verschieben der Plattform in eine erste X-Y-Achsenposition;
Bewegen der Plattform entlang der Z-Achse, bis ein erfasstes Bild aus dem genannten Video-Streaming-Kanal als fokussiert erkannt wird;
Erfassen eines Bildes mit dem Kamerasensor in der Brennebene unter Verwendung eines vorgegebenen Satzes von Kameraparametern für die statische Bilderfassung;
Speichern des genannten erfassten Bildes als ein erstes erfasstes Bild;
Verschieben der Plattform in eine zweite X-Y-Achsenposition und gleichzeitiges oder aufeinanderfolgendes Bewegen der Plattform entlang der Z-Achse um eine vorgegebene Distanz auf der Z-Achse in einer ersten Richtung zur oder von der Brennebene, wobei die vorgegebene Distanz auf der Z-Achse ein Bruchteil der gesamten im optischen System verfügbaren Bewegung auf der Z-Achse ist;
Bewegen der Plattform entlang der Z-Achse in einer zweiten, zur ersten Richtung umgekehrten Richtung zu oder von der Brennebene, bis ein erfasstes Bild aus dem genannten Video-Streaming-Kanal als fokussiert erkannt wird;
Erfassen eines Bildes mit dem Kamerasensor in der Brennebene unter Verwendung des vorgegebenen Satzes von Kameraparametern für die statische Bilderfassung;
Speichern des genannten erfassten Bildes als ein zweites erfasstes Bild;
Wiederholen der obigen Schritte, beginnend mit dem Verschieben zu einer zweiten X-Y-Achsenposition, bis eine vorgegebene Anzahl an Bildern aus verschiedenen mikroskopischen Feldern erfasst wurde.

2. Verfahren zum Betrieb eines optischen Systems nach dem vorangehenden Anspruch, wobei die zweite X-Y-Achsenposition relativ zur ersten X-Y-Achsenposition so definiert ist, dass das erste erfasste Bild und das zweite erfasste Bild nebeneinander liegen.

3. Verfahren zum Betrieb eines optischen Systems nach dem vorangehenden Anspruch, bei dem aufeinanderfolgende Positionen der X-Y-Achse so bestimmt werden, dass sich ein rationaler spiralförmiger Weg von nebeneinander erfassten Bildern ergibt.

4. Verfahren zum Betrieb eines optischen Systems nach einem der Ansprüche 1-2, bei dem aufeinanderfolgende X-Y-Achsenpositionen so bestimmt werden, so dass sich ein in zwei Richtungen verlaufender Weg von nebeneinander erfassten Bildern ergibt.

5. Verfahren zum Betrieb eines optischen Systems nach dem vorangehenden Anspruch, bei dem aufeinanderfolgende X-Y-Achsenpositionen so bestimmt werden, dass aufeinanderfolgende Abtastungen in X-Richtung in umgekehrter Richtung zur vorhergehenden Abtastung in X-Richtung erfolgen, indem die Bewegung bei jeder Abtastung in X-Richtung entlang der Y-Richtung erfolgt.

6. Verfahren zum Betrieb eines optischen Systems nach einem der vorangehenden Ansprüche, umfassend ein maschinelles Lernverfahren, um zu erkennen, ob der Video-Streaming-Kanal fokussiert ist, wobei das Verfahren mit zuvor aufgenommenen Bildern von Objektträgern mit biologischen Proben trainiert wurde, wobei die genannten zuvor aufgenommenen Bilder fokussierte und nicht fokussierte Bilder umfassen, die entsprechend gekennzeichnet sind.

7. Verfahren zum Betrieb eines optischen Systems nach einem der vorangehenden Ansprüche, wobei die Bewegung der Plattform entlang der Z-Achsen-Position bis zum Erkennen eines fokussierten Bildes aus dem genannten Video-Streaming-Kanal umfasst:
eine erste Stufe mit einer schrittweisen Bewegung entlang der Z-Achse um einen ersten vorgegebenen Schrittabstand auf der Z-Achse; und
eine zweite Stufe mit einer schrittweisen Bewegung um einen zweiten vorgegebenen Schrittabstand auf der Z-Achse;
wobei der erste vorgegebene Schrittabstand auf der Z-Achse größer ist als der zweite vorgegebene Schrittabstand auf der Z-Achse.

8. Verfahren zum Betrieb eines optischen Systems nach einem der vorangehenden Ansprüche, wobei das Verschieben der Plattform in eine zweite X-Y-Achsenposition vor der Bewegung der Plattform entlang der Z-Achsenposition in der genannten ersten Richtung erfolgt.

9. Verfahren zum Betrieb eines optischen Systems nach einem der vorangehenden Ansprüche, wobei, wenn der elektronische Datenprozessor nicht in der Lage ist, eines der über den genannten Video-Streaming-Kanal erfassten Einzelbilder als fokussiert zu bestimmen, wenn die Plattform entlang der Z-Achse in der zweiten genannten Richtung bewegt wird,
das Verfahren ferner das Bewegen der Plattform entlang der Z-Achse in der genannten ersten Richtung um einen weiteren Bruchteil der gesamten im optischen System verfügbaren Bewegung auf der Z-Achse umfasst,
wobei der genannte weitere Bruchteil der gesamten im optischen System verfügbaren Bewegung auf der Z-Achse größer ist als der genannte erste Bruchteil der gesamten im optischen System verfügbaren Bewegung auf der Z-Achse.

10. Verfahren zum Betrieb eines optischen Systems nach einem der vorangehenden Ansprüche, wobei das optische System und der elektronische Datenprozessor zum Abtasten eines Objektträgers mit biologischen Proben aus einem dünnen Blutausstrich, einem dicken Blutausstrich, einem zytologischen Ausstrich oder einem Testausstrich ausgelegt sind.

11. Verfahren zum Betrieb eines optischen Systems nach einem der vorangehenden Ansprüche zur Analyse eines Objektträgers mit biologischen Proben, wobei der Objektträger mit biologischen Proben ein Objektträger mit potentiell mit Malaria infizierten Blutproben oder ein Objektträger für zervikale Zytologie zur Früherkennung von Gebärmutterhalskrebs ist.

12. Verfahren zum Betrieb eines optischen Systems nach einem der vorangehenden Ansprüche, wobei das optische System so ausgelegt ist, dass es eine variable optische Vergrößerung, insbesondere eine Vergrößerung von 1x bis 1000x, bereitstellen kann.

13. Nichtflüchtiges Speichermedium, umfassend Programmanweisungen zur Durchführung eines Verfahrens zum Betrieb eines optischen Systems, das an einer mobilen Vorrichtung angebracht ist, umfassend einen elektronischen Datenprozessor und eine Kamera mit einem Objektiv, zum Abtasten eines Objektträgers mit biologischen Proben, indem mehrere versetzte Bilder des genannten Objektträgers aufgenommen werden, wobei die Programmanweisungen Anweisungen enthalten, die von einem Datenprozessor ausgeführt werden können, um das Verfahren nach einem der Ansprüche 1-12 durchzuführen.

14. Mobile Vorrichtung, umfassend das nichtflüchtige Speichermedium nach dem vorangehenden Anspruch.

15. Mobile Vorrichtung und optisches System, das an der mobilen Vorrichtung angebracht werden kann, umfassend einen elektronischen Datenprozessor und eine Kamera mit einem Objektiv, zum Abtasten eines Objektträgers mit biologischen Proben, indem mehrere versetzte Bilder des genannten Objektträgers aufgenommen werden; wobei das optische System ein vergrößerndes optisches Element oder optische Elemente zur Vergrößerung des Objektträgers mit biologischen Proben umfasst;
wobei das optische System eine bewegliche Plattform umfasst, die quer zum Objektiv entlang der X-Y-Achse beweglich ist und die auch entlang einer Z-Achse zum Objektiv hin und von diesem weg beweglich ist;
wobei das optische System einen Motormechanismus zum Verschieben der Plattform entlang der X-Y-Achse und zum Bewegen der Plattform entlang der Z-Achse umfasst; wobei das optische System eine Schnittstelle zur Regelung des Motormechanismus des optischen Systems durch den elektronischen Datenprozessor umfasst;
wobei der elektronische Datenprozessor so eingerichtet ist, dass er folgenden Schritte ausführt:
Einrichten und Aufrechterhalten eines Video-Streaming-Kanals von der Kamera in den elektronischen Datenprozessor während der Bilderfassung;
Verschieben der Plattform in eine erste X-Y-Achsenposition;
Bewegen der Plattform entlang der Z-Achse-Position, bis ein erfasstes Bild aus dem genannten Video-Streaming-Kanal als fokussiert erkannt wird;
Erfassen eines Bildes mit dem Kamerasensor in der Brennebene unter Verwendung eines vorgegebenen Satzes von Kameraparametern für die statische Bilderfassung;
Speichern des genannten erfassten Bildes als ein erstes erfasstes Bild;
Verschieben der Plattform in eine zweite X-Y-Achsenposition und gleichzeitiges oder aufeinanderfolgendes Bewegen der Plattform entlang der Z-Achsen-Position um eine vorgegebene Distanz auf der Z-Achse in einer ersten Richtung zur oder von dem Objektiv, wobei die vorgegebene Distanz auf der Z-Achse ein Bruchteil der gesamten im optischen System verfügbaren Bewegung auf der Z-Achse ist;
Bewegen der Plattform entlang der Z-Achsen-Position in einer zweiten Richtung, die die Umkehrung der ersten Richtung ist, zu oder von dem Objektiv, bis ein erfasstes Bild aus dem genannten Video-Streaming-Kanal als fokussiert erkannt wird;
Erfassen eines Bildes mit dem Kamerasensor in der Brennebene unter Verwendung eines vorgegebenen Satzes von Kameraparametern für die statische Bilderfassung;
Speichern des genannten erfassten Bildes als ein zweites erfasstes Bild;
Wiederholen der obigen Schritte, beginnend mit dem Verschieben zu einer zweiten X-Y-Achsenposition, bis eine vorgegebene Anzahl an Bildern aus verschiedenen mikroskopischen Feldern erfasst wurde.

## Revendications

1. Procédé de fonctionnement d'un système optique fixé sur un dispositif mobile comprenant un traiteur de données électronique et une caméra disposant d'un objectif, pour le balayage d'une lame d'échantillon biologique à travers la capture de multiples images translationnelles de ladite lame ;
dans lequel le système optique comprend un élément ou des éléments optique(s) amplificateur(s) pour amplifier la lame d'échantillon biologique ;
dans lequel le système optique comprend une plateforme mobile, qui peut être mue transversalement par rapport à l'objectif le long de l'axe X-Y, et qui peut également être mue sur un axe Z vers et à partir de l'objectif ;
dans lequel le système optique comprend un mécanisme moteur pour transférer la plateforme le long de l'axe X-Y et mouvoir la plateforme le long de l'axe Z ;
dans lequel le système optique comprend une interface pour un contrôle en boucle fermée du mécanisme moteur du système optique par le traiteur de données électronique;
dans lequel le procédé comprend l'exécution des étapes suivantes par le traiteur de données électronique :
établir et maintenir un canal de streaming vidéo de la caméra vers le traiteur de données électronique à travers la capture d'images ;
transférer la plateforme vers une première position de l'axe X-Y ;
mouvoir la plateforme le long de l'axe Z jusqu'à ce que qu'une image capturée à partir dudit canal de streaming vidéo soit déterminée comme nette ;
capturer une image avec le capteur de caméra sur le plan focal, à l'aide d'un ensemble prédéterminé de paramètres de caméra pour la capture d'une image statique ;
sauvegarder ladite image capturée en tant que première image capturée ;
transférer la plateforme vers une seconde position de l'axe X-Y et, simultanément ou séquentiellement, mouvoir la plateforme le long de l'axe Z à une distance de l'axe Z prédéterminée dans une première direction vers ou à partir du plan focal, dans lequel la distance d'axe Z prédéterminée est une fraction du mouvement total de l'axe Z disponible dans le système optique ;
mouvoir la plateforme le long de l'axe Z dans une seconde direction qui est l'inverse de la première direction vers ou à partir du plan focal, jusqu'à ce qu'une image capturée à partir dudit canal de streaming vidéo soit déterminée comme nette ;
capturer une image avec le capteur de caméra sur le plan focal, à l'aide du ensemble prédéterminé de paramètres de caméra pour la capture d'une image statique ;
sauvegarder ladite image capturée en tant que seconde image capturée ;
répéter les étapes ci-dessus, commençant par le transfert vers une seconde position de l'axe X-Y, jusqu'à ce qu'un nombre prédéterminé d'images de différents champs microscopiques soient capturées.

2. Procédé de fonctionnement d'un système optique selon la revendication précédente, dans lequel la seconde position de l'axe X-Y est définie par rapport à la première position de l'axe X-Y telle que la première image capturée et la seconde image capturée soient adjacentes.

3. Procédé de fonctionnement d'un système optique selon la revendication précédente, dans lequel les positions d'axe X-Y successives sont déterminées telles qu'un trajet spiral rationnel d'images capturées adjacentes soit obtenu.

4. Procédé de fonctionnement d'un système optique selon l'une quelconque des revendications 1-2 dans lequel les positions d'axe X-Y successives sont déterminées telles qu'un trajet de balayage bidirectionnel d'images capturées adjacentes soit obtenu.

5. Procédé de fonctionnement d'un système optique selon la revendication précédente dans lequel les positions d'axe X-Y successives sont déterminées telles que des balayages de direction X successifs soient exécutés dans la direction inverse du balayage de direction X précédent en mouvant de manière incrémentielle le long de la direction Y pour chaque balayage de direction X.

6. Procédé de fonctionnement d'un système optique selon l'une quelconque des revendications précédentes, comprenant déterminer le canal de streaming vidéo comme net avec un procédé d'apprentissage machine à l'aide d'un modèle d'apprentissage machine pré-entraîné avec des images préalablement capturées de lames d'échantillon biologique, dans lequel lesdites images préalablement capturées comprennent des images nettes et floues, et dument étiquetées.

7. Procédé de fonctionnement d'un système optique selon l'une quelconque des revendications précédentes dans lequel l'étape de mouvoir la plateforme le long de la position de l'axe Z jusqu'à ce qu'une image capturée à partir dudit canal de streaming vidéo soit déterminée comme nette, comprend :
une première étape consistant à mouvoir successivement le long de l'axe Z à une première distance de pas de l'axe Z prédéterminée ; et
une seconde étape consistant à mouvoir successivement le long de l'axe Z à une seconde distance de pas de l'axe Z prédéterminée ;
dans lequel la première distance de pas de l'axe Z prédéterminée est plus grande que la seconde distance de pas de l'axe Z prédéterminée.

8. Procédé de fonctionnement d'un système optique selon l'une quelconque des revendications précédentes dans lequel l'étape de transférer la plateforme vers une seconde position de l'axe X-Y est exécutée séquentiellement avant de mouvoir la plateforme le long de la position de l'axe Z dans ladite première direction.

9. Procédé de fonctionnement d'un système optique selon l'une quelconque des revendications précédentes dans lequel si le traiteur de données électronique est incapable de déterminer une quelconque image capturée à partir dudit canal de streaming vidéo comme nette lorsque la plateforme est mue le long de l'axe Z dans ladite seconde direction,
le procédé comprend également mouvoir la plateforme le long de l'axe Z dans ladite première direction d'une fraction supplémentaire du mouvement total de l'axe Z disponible dans le système optique,
dans lequel ladite fraction supplémentaire du mouvement total de l'axe Z disponible dans le système optique est plus grande que la première fraction du mouvement total de l'axe Z disponible dans le système optique.

10. Procédé de fonctionnement d'un système optique selon l'une quelconque des revendications précédentes dans lequel le système optique et le traiteur de données électronique sont arrangés pour le balayage d'une lame d'échantillon biologique de frottis sanguin fin, frottis sanguin épais, frottis cytologique, ou frottis de test.

11. Procédé de fonctionnement d'un système optique selon l'une quelconque des revendications précédentes pour analyser une lame d'échantillon biologique, dans lequel la lame d'échantillon biologique est une lame d'échantillon de sang potentiellement infecté par la malaria, ou une lame de cytologie cervicale pour le dépistage du cancer du col de l'utérus.

12. Procédé de fonctionnement d'un système optique selon l'une quelconque des revendications précédentes dans lequel le système optique est adapté pour accommoder une puissance d'amplification optique variable, en particulier une amplification allant de 1x à 1000x.

13. Moyen de stockage non transitoire incluant des instructions de programme pour mettre en place un procédé de fonctionnement d'un système optique fixé sur un dispositif mobile comprenant un traiteur de données électronique et une caméra disposant d'un objectif, pour le balayage d'une lame d'échantillon biologique à travers la capture de multiples images translationnelles de ladite lame, les instructions de programme incluant des instructions pouvant être exécutées par un traiteur de données pour exécuter le procédé selon l'une quelconque des revendications 1-12.

14. Dispositif mobile comprenant le moyen de stockage non-transitoire selon la revendication précédente.

15. Dispositif mobile et système optique pouvant être fixé sur un dispositif mobile comprenant un traiteur de données électronique et une caméra disposant d'un objectif, pour le balayage d'une lame d'échantillon biologique à travers la capture de multiples images translationnelles de ladite lame ;
dans lequel le système optique comprend un élément ou des éléments optique(s) amplificateur(s) pour amplifier la lame d'échantillon biologique ;
dans lequel le système optique comprend une plateforme mobile, qui peut être mue transversalement par rapport à l'objectif le long de l'axe X-Y, et qui peut également être mue sur un axe Z vers et à partir de l'objectif ;
dans lequel le système optique comprend un mécanisme moteur pour transférer la plateforme le long de l'axe X-Y et mouvoir la plateforme le long de l'axe Z ;
dans lequel le système optique comprend une interface pour un contrôle en boucle fermée du mécanisme moteur du système optique par le traiteur de données électronique;
dans lequel le traiteur de données électronique est arrangé pour exécuter les étapes suivantes :
établir et maintenir un canal de streaming vidéo de la caméra vers le traiteur de données électronique à travers la capture d'images ;
transférer la plateforme vers une première position de l'axe X-Y ;
mouvoir la plateforme le long de la position de l'axe Z jusqu'à ce qu'une image capturée à partir dudit canal de streaming vidéo soit déterminée comme nette ;
capturer une image avec le capteur de caméra sur le plan focal, à l'aide d'un ensemble prédéterminé de paramètres de caméra pour la capture d'une image statique ;
sauvegarder ladite image capturée en tant que première image capturée ;
transférer la plateforme vers une seconde position de l'axe X-Y et, simultanément ou séquentiellement, mouvoir la plateforme le long de la position de l'axe Z à une distance de l'axe Z prédéterminée dans une première direction vers ou à partir de l'objectif, dans lequel la distance d'axe Z prédéterminée est une fraction du mouvement total de l'axe Z disponible dans le système optique ;
mouvoir la plateforme le long de la position de l'axe Z dans une seconde direction qui est l'inverse de la première direction vers ou à partir de l'objectif, jusqu'à ce qu'une image capturée à partir dudit canal de streaming vidéo soit déterminée comme nette ;
capturer une image avec le capteur de caméra sur le plan focal, à l'aide d'un ensemble prédéterminé de paramètres de caméra pour la capture d'une image statique ;
sauvegarder ladite image capturée en tant que seconde image capturée ;
répéter les étapes ci-dessus, commençant par transférer vers une seconde position de l'axe X-Y, jusqu'à ce qu'un nombre prédéterminé d'images de différents champs microscopiques soient capturées.
